# EUROPEAN PATENT APPLICATION

(11) **EP 4 683 316 A1**
(43) Date of publication of application: **21.01.2026**
(21) Application number: 24770395.2
(22) Date of filing: 19.02.2024
(51) Int. Cl.: H04N 5/93

(54) **DATA GENERATION DEVICE AND DATA GENERATION METHOD**

(30) Priority: 14.03.2023 JP 2023039892
(71) Applicant: OMRON Corporation, Kyoto 600-8530 (JP)
(72) Inventor: FUJIKI, Tsubasa, Muko-shi, Kyoto 617-0002 (JP); YASUKAWA, Kazuki, Muko-shi, Kyoto 617-0002 (JP)
(74) Representative: Becker, Eberhard
(86) International application number: PCT/JP2024/005652
(87) International publication number: WO 2024/190280

(57) **Abstract**

The present invention efficiently and accurately creates training data required to create a video analysis model. A data generation device (1) comprises: an information display control unit (101) that associates and displays work content information with each of multiple pieces of video data obtained by capturing video of production work; a reproduction and display control unit (102) that reproduces video data; an input acceptance unit (103) that accepts a user input related to associated work content information; and a data output control unit (104) that outputs, as output data, association information between the video data and the work content information. The reproduction and display control unit (102) changes the reproduction and display mode of video data that is being reproduced and displayed according to the type of work content information associated with the video data.

## Description

### Technical Field

The present invention relates to a data generation device and the like that generates training data necessary for creating a video analysis model.

### Related Art

Conventionally, efforts have been made to improve productivity and quality by capturing the implementation status of work processes at production sites such as factories as videos and analyzing the video data. In analyzing this video data, recently, AI (artificial intelligence) is used to create video analysis models and automatically determine work content.

In order to create a video analysis model, it is necessary to prepare a large amount of video data as training data (teacher data). To create this training data, a task called annotation is required to associate work content with each video data.

### Citation List

### Patent Literature

Patent Literature 1: Japanese Patent No. 4221011.
Patent Literature 2: Japanese Patent Application Laid-Open Publication No. 2019-159884.
Patent Literature 3: Japanese Patent Application Laid-Open Publication No. 2004-363831.

### SUMMARY OF INVENTION

### Technical Problem

As described above, since it is necessary to perform annotation on a large amount of video data as training data, there is a problem that the time required for this work becomes enormous. Further, there is also a problem that if there are errors in associating work content, the accuracy of the training data decreases, which in turn leads to a decrease in the accuracy of the video analysis model.

One aspect of the present invention aims to provide a data generation device capable of efficiently and accurately creating training data necessary for creating a video analysis model. Solution to Problem

In order to solve the above problems, a data generation device according to one aspect of the present invention includes an information display control portion, performing control to associate and display work content information with each of a plurality of video data in which production work is captured; a reproduction and display control portion, performing reproduction and display of the video data; an input acceptance portion, accepting user input for the work content information associated with the video data; and a data output control portion, configured to output, as output data, information of association between the video data and the work content information, the information of association being accepted by the input acceptance portion. The reproduction and display control portion changes a reproduction and display format of the video data according to a type of the work content information associated with the video data being reproduced and displayed.

In order to solve the above problems, a data generation method according to one aspect of the present invention includes an information display control step of performing control to associate and display work content information with each of a plurality of video data in which production work is captured; a reproduction and display control step of performing reproduction and display of the video data; an input acceptance step of accepting user input for the work content information associated with the video data; and a data output control step of outputting, as output data, information of association between the video data and the work content information, the information of association being accepted in the input acceptance step. The reproduction and display control step changes a reproduction and display format of the video data according to a type of the work content information associated with the video data being reproduced and displayed.

### Effects of Invention

According to one aspect of the present invention, it becomes possible to efficiently and accurately create training data necessary for creating a video analysis model.

### BRIEF DESCRIPTION OF DRAWINGS

[FIG. 1] is an explanatory diagram schematically showing a configuration of an example of a data collection system 50 to which a data generation device according to an embodiment of the present disclosure is applied.
[FIG. 2] is a flow diagram showing a procedure for adapting AI model #2.
[FIG. 3] is an explanatory diagram showing the flow of FIG. 2 in images.
[FIG. 4] is a block diagram showing an example of a main component configuration of a data generation device.
[FIG. 5] is a diagram showing an example of contents of a task list table stored in a storage portion of a data generation device.
[FIG. 6] is a diagram showing an example of a screen display for manually correcting annotation data #2, which is displayed on a display portion of a data generation device.
[FIG. 7] is a diagram showing another example of varying reproduction and display formats in reproduction display of video data.
[FIG. 8] is a diagram showing an enlarged part of a time chart image.
[FIG. 9] is a diagram showing an enlarged part of another time chart image with a different display format.
[FIG. 10] is a diagram showing an example of contents of a reproduction speed table stored in a storage portion of a data generation device.

### DESCRIPTION OF EMBODIMENTS

Hereinafter, an embodiment according to one aspect of the disclosure (hereinafter also referred to as "this embodiment") will be described based on the drawings.

### §1 Application example

### [Overview of data collection system including data generation device]

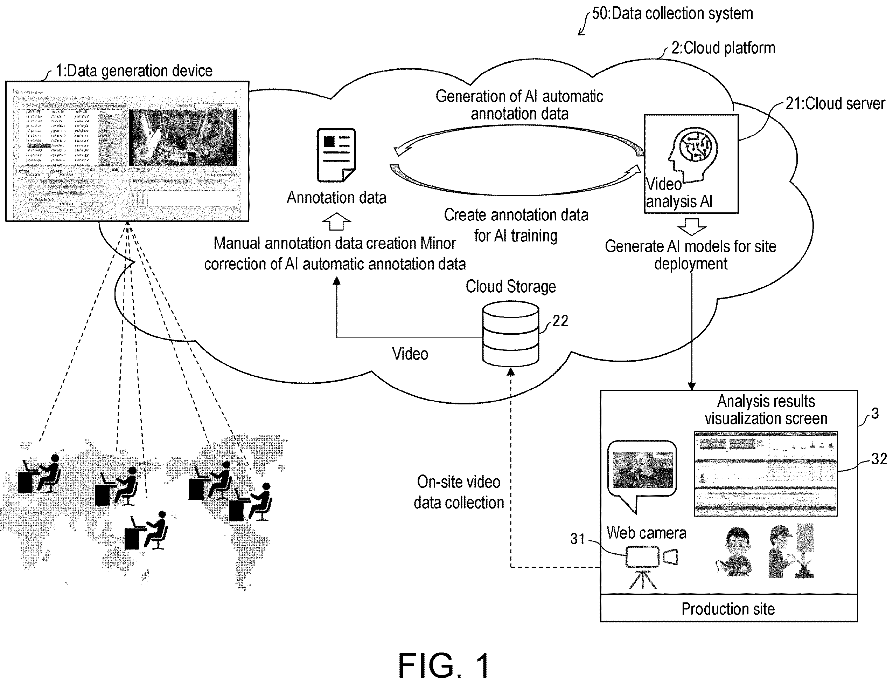

First, an example of a scene to which the present invention is applied will be described using FIG. 1. FIG. 1 is an explanatory diagram schematically showing a configuration of an example of a data collection system 50 to which a data generation device 1 according to an embodiment of the present disclosure is applied. The data collection system 50 is a system that collects video data in which production work is imaged and realizes data collection regarding human work (human actions) performed by humans from the collected video data using a video analysis model.

As shown in FIG. 1, the data collection system 50 includes a data generation device 1, a cloud platform 2, and an imaging device 31 and a terminal device 32 installed at a site 3 such as a manufacturing site.

The imaging device 31 images production work at the site 3 and transmits the imaged video data to the cloud platform 2. The imaging device 31 is, for example, a web camera. To improve estimation accuracy by video analysis AI (artificial intelligence) in the cloud server 21 provided in the cloud platform 2, a plurality of imaging devices 31 may be installed to transmit video data obtained by imaging the same work from different angles. The terminal device 32 presents analysis results by the video analysis AI received from the cloud platform 2 and displays them to the manager at the site 3 and the like.

The cloud platform 2 includes at least the above-described cloud server 21 and the cloud storage 22. The cloud storage 22 stores video data obtained by imaging production work transmitted from the site 3. The cloud server 21 has a video analysis AI, and the video analysis AI performs video analysis of video data obtained by imaging production work transmitted from the site 3 using a video analysis model. The cloud server 21 transmits analysis results to the terminal device 32 at the site 3.

Accordingly, the site 3 may realize data collection regarding human work in production work and continuously achieve improvement in productivity and quality by simply installing the imaging device 31, imaging production work, and transmitting the imaged video data to the cloud platform 2.

The data generation device 1 creates training data necessary for creating a video analysis model used by the video analysis AI of the cloud server 21. As described above, to create a video analysis model, it is necessary to prepare a large amount of video data as training data. To create this training data, a task called annotation is required to associate work content with each video data.

The data generation device 1 is a device that enables improving the accuracy of automatic annotation by the video analysis AI while automating this annotation by implementing it using the video analysis AI of the cloud server 21. The video analysis AI performs annotation using a video analysis model for performing annotation.

Hereinafter, the video analysis model used by the video analysis AI for performing annotation is referred to as "AI model #1". The video analysis model created by the video analysis AI learning using training data annotated using "AI model #1" and used for analyzing video data obtained by imaging production work transmitted from the site 3 is referred to as "AI model #2". Further, performing annotation with video analysis AI may be referred to as automatic annotation.

### §2 Configuration example

### [Procedure for adapting AI model #2 to site]

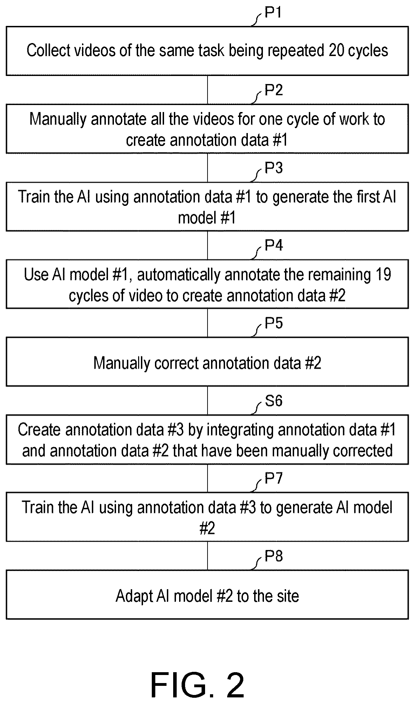

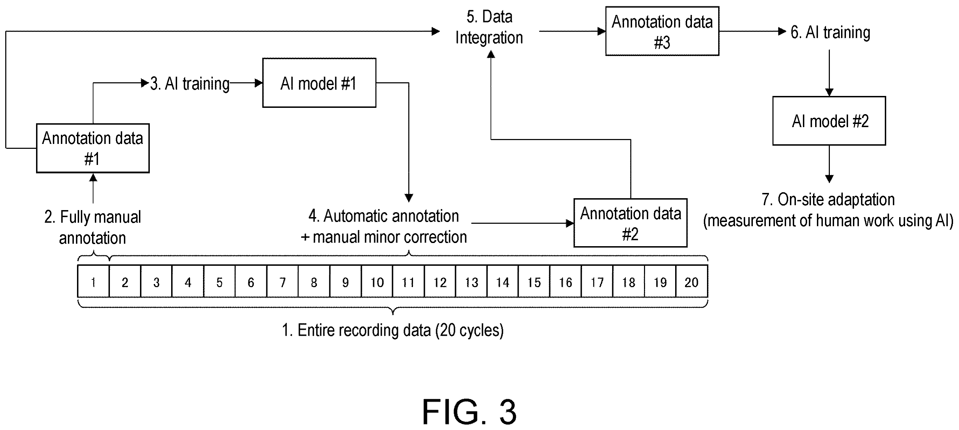

The procedure for adapting AI model #2 to the site 3 will be described using FIG. 2 and FIG. 3. FIG. 2 is a flow diagram showing the procedure for adapting AI model #2. FIG. 3 is an explanatory diagram showing the flow of FIG. 2 in images.

P1 in FIG. 2: The user uses the data generation device 1 to collect, from the cloud storage 22, a video (recording data) in which a series of work is repeated for, for example, 20 cycles (see 1. in FIG. 3). A video in which a series of work is imaged may be collected for 20 cycles to form recording data of one file. The cycle count to be collected is not limited to 20.

P2 in FIG. 2: The user uses the data generation device 1 to manually perform annotation on video for one cycle out of the collected 20 cycles to create annotation data #1 (see 2. in FIG. 3).

Specifically, the user divides the video for each human work while watching the video for one cycle. For example, the user presses a predetermined button that instructs division of the video, sets the point up to the pressed time as the end point of one work operation, and divides the video by setting the pressed time as the start point of the next work operation. Then, the user assigns task information (work content information), which is information indicating the respective work content, to each of the divided videos.

P3 in FIG. 2: The user uses the data generation device 1 to make the video analysis AI learn (train) using annotation data #1 as training data, and generates AI model #1 (see 3. in FIG. 3).

P4 in FIG. 2: The user uses the data generation device 1 to make the video analysis AI perform automatic annotation on the remaining 19 cycles of video using AI model #1, and creates annotation data #2 (see 4. in FIG. 3).

P5 in FIG. 2: The user uses the data generation device 1 to manually correct annotation data #2 created by automatic annotation in P4 (see 4. in FIG. 3).

P6 in FIG. 2: The user uses the data generation device 1 to create annotation data #3 that integrates annotation data #2 corrected in P5 and annotation data #1 manually created in P2 (see 5. in FIG. 3).

P7 in FIG. 2: The user uses the data generation device 1 to make the video analysis AI learn using annotation data #3 created in P6 as training data, and generates AI model #2 (see 6. in FIG. 3).

P8 in FIG. 2: The user uses the data generation device 1 to adapt AI model #2 generated in P7 to the site 3 (see 7. in FIG. 3).

### [Configuration of data generation device]

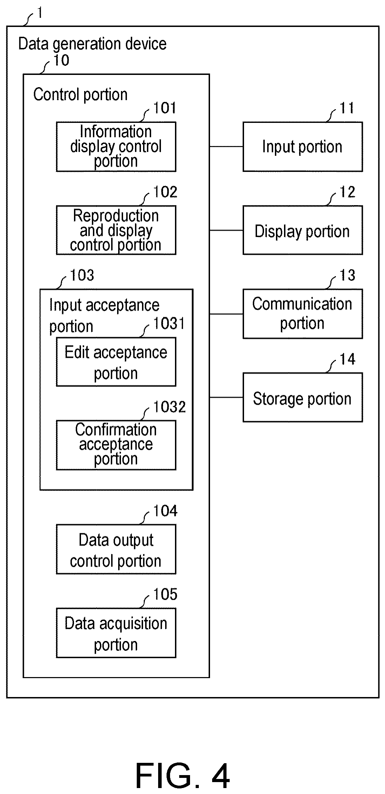

Next, the configuration of the data generation device 1 will be described based on FIG. 4. FIG. 4 is a block diagram showing an example of the main component configuration of the data generation device 1. As shown in FIG. 4, the data generation device 1 includes an input portion 11 that accepts input of various data, a display portion 12 that displays various information, and a communication portion 13 for the data generation device 1 to communicate with other devices. It is noted that the input portion 11 may be, for example, a touch panel, and in this case, the touch panel serves as both the input portion 11 and the display portion 12. Furthermore, the data generation device 1 includes a control portion 10 that comprehensively controls each portion of the data generation device 1, and a storage portion 14 that stores various data used by the data generation device 1.

The control portion 10 includes an information display control portion 101, a reproduction and display control portion 102, an input acceptance portion 103, a data output control portion 104, and a data acquisition portion 105.

The information display control portion 101 performs control to associate and display task information with each of the plurality of video data in which production work is captured. Here, "the plurality of video data in which production work is captured" refers to image data of videos divided for each work. Hereinafter, to specify from video data in a broad sense, video data (in a narrow sense), which consists of image data of video divided for each work, is referred to as video data D.

The reproduction and display control portion 102 performs reproduction and display of a plurality of video data D in which production work is captured.

The input acceptance portion 103 accepts user input for task information associated with video data D.

The data output control portion 104 outputs, as output data, information of association between the video data D and the task information, the input of which has been accepted by the input acceptance portion 103. Here, the "information of association between the video data D and the task information" is annotation data.

The data acquisition portion 105 acquires various data via the communication portion 13.

Hereinafter, the information display control portion 101, the reproduction and display control portion 102, the input acceptance portion 103, the data output control portion 104, and the data acquisition portion 105 will be described in detail.

### <Information display control portion>

The information display control portion 101 may perform control to display the association between the video data D and the task information for which input has been accepted by the input acceptance portion 103 in a display form different from the display of the association between the video data D and the task information for which input has not been accepted by the input acceptance portion 103.

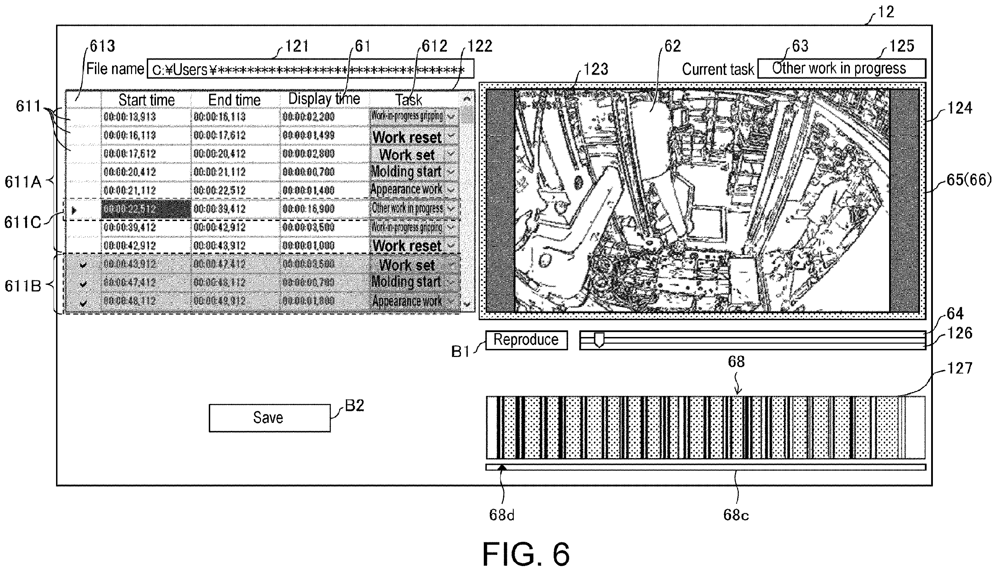

Specifically, for example, the information display control portion 101 may perform control to display information specifying the video data D and associated task information in a list form (see list image 61 in FIG. 6). As information specifying the video data D, for example, the start time and the end time of the video data D may be used. The start time and end time are times from the beginning of recording data constituting one file.

In that case, the information display control portion 101 may perform control to display the association between the video data D and the task information for which instruction input indicating confirmation has been accepted by a confirmation acceptance portion 1032 of the input acceptance portion 103 described later, in at least one display form among background color, text color, and font format that is different from the display of the association between the video data D and the task information for which instruction input indicating confirmation has not been accepted by the confirmation acceptance portion 1032 (see confirmed list column 611A and unconfirmed list column 611B in list image 61 of FIG. 6).

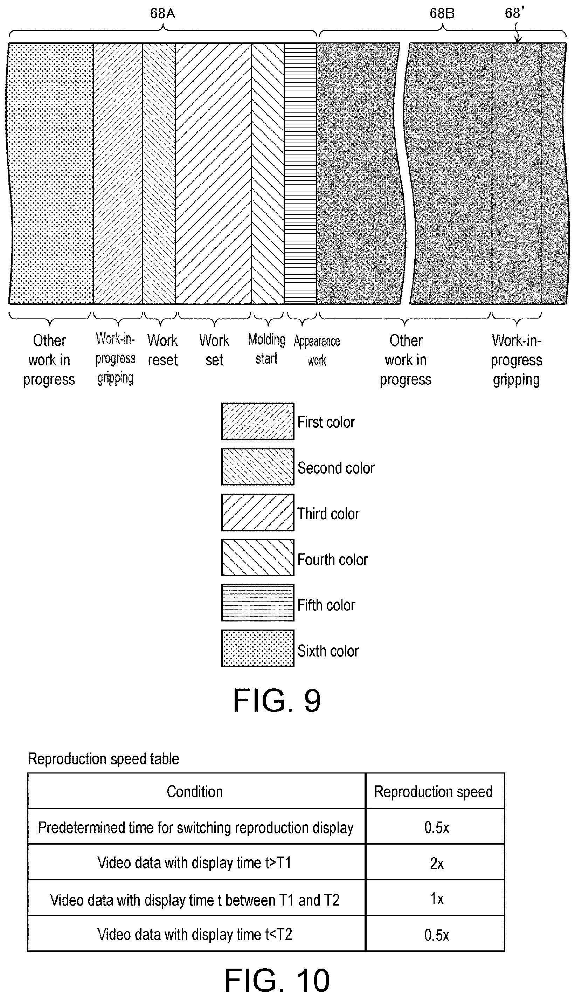

Alternatively, the information display control portion 101 may perform control to display in time chart form that displays colors corresponding to types of task information associated with the video data D in time domains indicating times at which the video data D was captured (see time chart image 68 in FIG. 6). In that case, the information display control portion 101 may perform control to display the color of the display of time domains for which instruction input indicating confirmation has been accepted by the confirmation acceptance portion 1032 of the input acceptance portion 103 described later, differently from the color of the display of time domains for which instruction input indicating confirmation has not been accepted by the confirmation acceptance portion 1032 (see confirmed time domain 68A and unconfirmed time domain 68B in time chart image 68' of FIG. 9).

The information display control portion 101 may perform both control to display in list form and control to display in time chart form, or may perform only control to display in list form, or only control to display in time chart form.

### <Reproduction and display control portion>

The reproduction and display control portion 102 may change the reproduction and display format of the video data D according to the type of task information associated with the video data D being reproduced and displayed in reproducing and displaying the video data D.

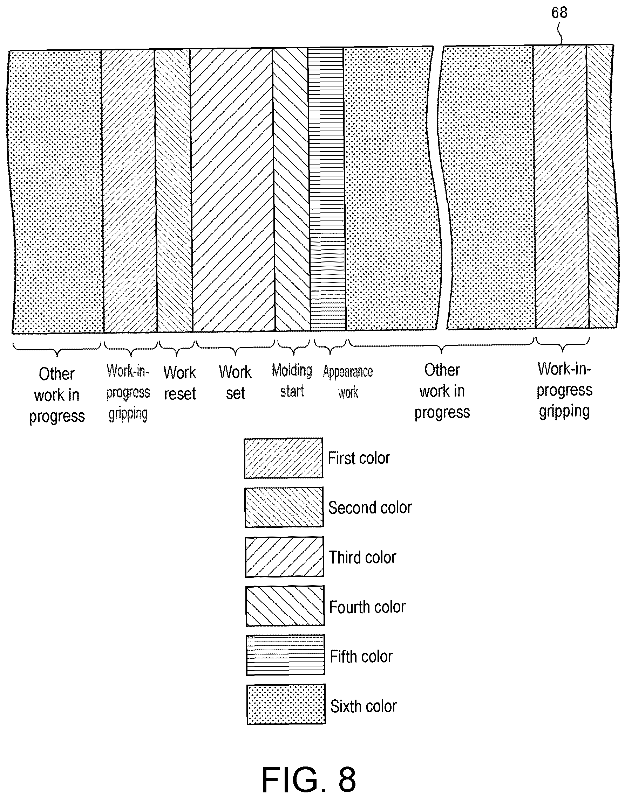

Specifically, for example, the reproduction and display control portion 102 may display an identification image indicating the type of associated task information in at least one of at least a part of a reproduction domain for reproducing and displaying the video data D, and at least a part of a domain around the reproduction domain (see identification image 65 in FIG. 6 and identification images 65A to 65C in FIG. 8).

Further, in this case, the reproduction and display control portion 102 may display a frame image that surrounds the reproduction domain as the identification image, and may set the color of the frame image to a color corresponding to the type of associated task information (see frame image 66 in FIG. 6).

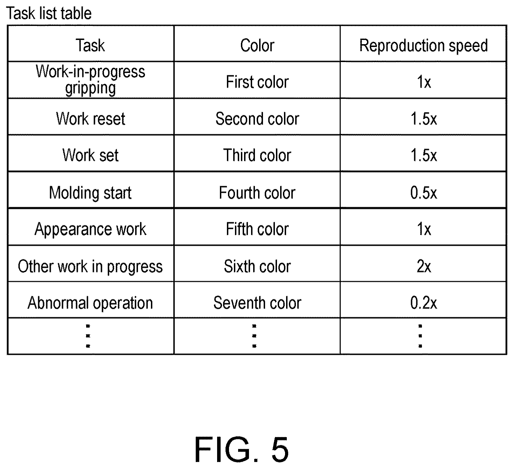

Furthermore, the reproduction and display control portion 102 may change the reproduction speed of the video data D according to the type of associated task information (see the task list table in FIG. 5). The reproduction and display control portion 102 may only change the reproduction speed according to the type of task information associated with the video data D being reproduced and displayed.

Furthermore, the reproduction and display control portion 102 may reduce the reproduction speed during at least a part of a period from a predetermined time before to a predetermined time after the timing of switching the reproduction and display of the video data D (see the reproduction speed table in FIG. 10).

### <Input acceptance portion>

The input acceptance portion 103 accepts instruction input indicating that the association between the video data D and the task information has been confirmed. The input acceptance portion 103 includes an edit acceptance portion 1031 that accepts input and changes of task information associated with the video data D, and a confirmation acceptance portion 1032 that accepts instruction input indicating that the association between the video data D and the task information has been confirmed.

In this case, the information display control portion 101 performs control to display the association between the video data D and the task information for which instruction input indicating confirmation has been accepted by the confirmation acceptance portion 1032, in a display form different from the display of the association between the video data D and the task information for which instruction input indicating confirmation has not been accepted by the confirmation acceptance portion 1032.

The confirmation acceptance portion 1032 may accept instruction input indicating confirmation by, for example, performing an operation to remove the check "✔" attached to a check column 613 in a list image 61 (see FIG. 6) described later, in which information specifying the video data D and associated the task information are displayed in list form. Further, the confirmation acceptance portion 1032 may determine that instruction input indicating confirmation has been accepted in the case of input or changes being made to a task information column 612 in the list image 61 (see FIG. 6), even without performing an operation to remove the check "✔" in the check column 613. In other words, the confirmation acceptance portion 1032 may consider it confirmed by input and changes being accepted by the edit acceptance portion 1031.

### <Data output control portion>

The data output control portion 104 may output, as output data (that is, annotation data), only information of associations between the video data D and the task information for which instruction input indicating confirmation has been accepted by the confirmation acceptance portion 1032. Here, the data output control portion 104 may prevent annotation data from being output (saved) unless all loaded video data D becomes confirmed.

### <Data acquisition portion>

The data acquisition portion 105 may acquire annotation data #2 (first output data) output by the AI model #1 (first video analysis model) that associates the task information with each of the plurality of video data D. In that case, the information display control portion 101 may perform display control based on the annotation data #2.

### [Operation of data generation device]

An example of the operation (data generation method) of the data generation device 1 will be described using FIG. 5 to FIG. 10. Here, using FIG. 5 to FIG. 10, a state in which the aforementioned P5 of FIG. 2 is being implemented for recording data (file) that includes a plurality of cycles of a series of work for performing molding processing on a work as production work will be described.

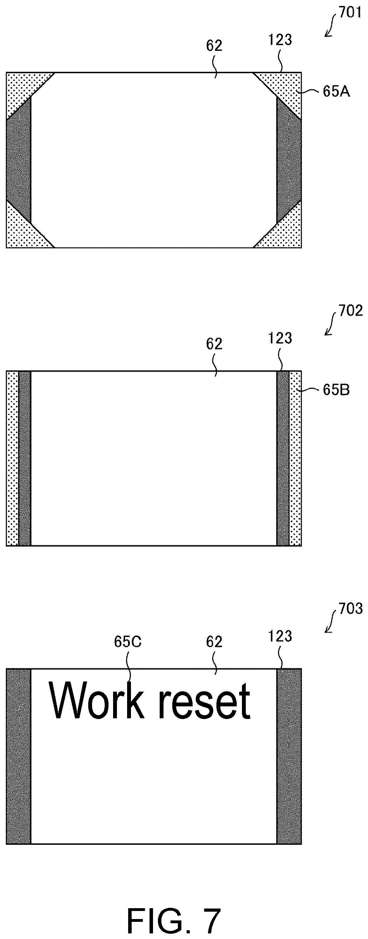

FIG. 5 is a diagram showing an example of the contents of a task list table stored in the storage portion 14. FIG. 6 is a diagram showing an example of a screen display for manually correcting annotation data #2, which is displayed on a display portion 12 of a data generation device 1. FIG. 7 is a diagram showing another example of varying reproduction and display formats in reproduction display of video data D. FIG. 8 is a diagram showing an enlarged part of a time chart image 68. FIG. 9 is a diagram showing an enlarged part of another time chart image 68 with a different display format. FIG. 10 is a diagram showing an example of the contents of a reproduction speed table stored in the storage portion 14.

As shown in FIG. 5, task information such as "work-in-progress gripping," "work reset," "work set," "molding start," "appearance work," "other work in progress," "abnormal operation," and the like are set. For each of the divided video data D, any applicable item is attached. Color and reproduction speed are set for each task information. The colors set for each task information are mutually different, enabling unique identification of task information by color. For example, "work-in-progress gripping" is set with "first color" and "reproduction speed 1x."

The reproduction speed may be set as a magnification relative to normal reproduction speed. In the example of FIG. 5, for "other work in progress," "work reset," and "work set," which have relatively long display times for the video data D, a speed greater than 1x, which is faster than the normal reproduction speed, is set. For "molding start," which has a short display time for the video data D, a speed smaller than 1x, which is slower than the normal reproduction speed, is set. For video data D whose display time is positioned between relatively long and short ones, 1x corresponding to normal reproduction speed is set.

As shown in FIG. 6, the file name of the loaded recording data is displayed in a domain 121. Automatic annotation has been performed on the loaded recording data, and annotation data #2 is included.

In a domain 122, the list image 61 of the loaded recording data is displayed by the information display control portion 101. The list image 61 displays information for specifying the video data D and associated task information in the list form. In the list image 61, the list column 611 extending in the horizontal direction corresponds to the display of the association between the video data D and the task information. The start time and end time are information for specifying the video data D, and the content of the task information column 612 is the task information. It is noted that in the example of FIG. 6, information on the display time of the video data D is also displayed.

For example, in the list image 61, the task information of the video data D specified by the start time "00:00:13,913" and the end time "00:00:16,113" in the topmost list column 611, with a display time of "00:00:02,200," is "work-in-progress gripping.

Then, in the list image 61, the display form is different between the confirmed list column 611A for which instruction input indicating confirmation has been accepted by the confirmation acceptance portion 1032 and the unconfirmed list column 611B for which instruction input indicating confirmation has not been accepted by the confirmation acceptance portion 1032.

In the example of FIG. 6, a check column 613 is provided in the list image 61, and a check "✔" indicating unconfirmed status is placed in the check column 613 of the unconfirmed list column 611B for unconfirmed video data D among the video data D created by automatic annotation. Such checks are placed on all video data D created by automatic annotation.

Then, the background color of the unconfirmed list column 611B is displayed differently from the background color of the confirmed list column 611A where the check has been removed. As described above, in addition to the background color, the text color and font format may also be made different.

The instruction input indicating confirmation by the confirmation acceptance portion 1032 may be performed, for example, by clicking the check in the check column 613. In the case of the task information associated with the video data D of the unconfirmed list column 611B being appropriate, the user removes the check in the check column 613. As a result, the background color switches to the background color of the confirmed list column 611A where the check has been removed.

On the other hand, in the case of the task information associated with the video data D of the unconfirmed list column 611B being inappropriate, the user uses the edit acceptance portion 1031 to input and change the task information in the task information column 612 in the list image 61. As a result, the check in the check column 613 is removed, and the background color switches to the background color of the confirmed list column 611A where the check has been removed.

The user performs confirmation of whether the video data D and the associated task information are appropriate by reproducing and displaying the video data D and visually checking the reproduced and displayed video 62.

In the domain (reproduction domain) 123 adjacent to the domain (reproduction domain) 122, the video 62 of the video data D of the column 611 selected in the list image 61 is displayed by the reproduction and display control portion 102. In the example of FIG. 6, the video data D with task information "other work in progress" specified by the start time "00:00:22,512" and the end time "00:00:39,412" of the selected list column 611C in the list image 61 is reproduced and displayed. The user selects the column 611 of the video data D to be confirmed in the list image 61 and clicks the reproduction button B1 to start the reproduction and display of the video 62.

The reproduction and display format of the video 62 to be reproduced and displayed differs according to the type of task information associated with the video data D. In the example of FIG. 6, a frame image 66 of a color set in the task information is displayed as an identification image 65 according to the type of task information in the domain 124 around the domain 123. The frame image 66 is displayed so as to surround the domain 123. Since the task information associated with the video data D being reproduced and displayed is "other work in progress", the color of the frame image 66 is the sixth color.

As described above, the identification image 65 may be displayed in at least a part of the domain 124 around the domain 123, may be displayed in at least a part of the domain 123, or may be displayed in both the domain 123 and the domain 124.

For example, as shown by the reference numeral 701 in FIG. 7, the identification image 65A may be displayed by superimposing on the reproduction display at the four corners of the domain 123. Further, as shown by the reference numeral 702 in FIG. 7, line-shaped identification images 65B may be displayed in the end domains where images positioned on the left and right are not displayed in the domain 123. The display colors of the identification image 65A and the identification image 65B are the colors set in the task information.

Further, as shown by the reference numeral 701 in FIG. 7, an identification image 65C consisting of text or the like of task information may be displayed in the domain 123 with a light color that does not impair the visibility of the video being reproduced and displayed. In that case as well, the display color of the identification image 65C may be the color set in the task information.

As described above, the reproduction speed of the video 62 being reproduced and displayed may be varied according to the type of task information associated with the video data D. In the example of FIG. 6, since the task information associated with the video data D being reproduced and displayed is "other work in progress", the reproduction speed is 2x speed.

Further, in the domain 125 above the domain 123, the task information associated with the video 62 being reproduced and displayed is displayed as a text image 63.

Further, in the domain 126 below the domain 123, a slide bar 64 indicating the reproduction position of the video 62 being reproduced and displayed in the domain 123 is displayed. By sliding the slide bar 64 left and right, the video 62 being reproduced and displayed may be advanced or rewound.

Then, in the domain 127 below the domain 126, a time chart image 68 of the loaded recording data is displayed by the information display control portion 101. As shown in FIG. 8, the time chart image 68 displays colors corresponding to the types of task information associated with the video data D in time domains indicating the times when the video data D was captured. That is, as shown in FIG. 6, in the time chart image 68, the task information of recording data for 19 cycles is displayed in colors.

Further, instead of the time chart image 68 shown in FIG. 8, a time chart image 68' shown in FIG. 9 may be displayed in the domain 126. As shown in FIG. 9, in the time chart image 68', the display color of the confirmed time domain 68A that has accepted the instruction input indicating confirmation by the confirmation acceptance portion 1032 differs from the display color of the unconfirmed time domain 68B that has not accepted the instruction input indicating confirmation. In this case, based on the color set in the task information, for example, by changing the saturation or brightness, the color tones of the confirmed time domain 68A and the unconfirmed time domain 68B are made different.

As shown in FIG. 6, the time chart image 68 may include a timeline 68c at the bottom edge position. By sliding a mark 68d on the timeline 68c left and right, the video data D to be reproduced and displayed in the domain 123 may be selected at that stop position. The reproduction and display control portion 102 reproduces and displays the video data D at the time corresponding to the stop position of the mark 68b, similar to the case where the column 611 is selected in the list image 61.

In response to all the list columns 611 in the list image 61 becoming confirmed list columns 611A with unchecked boxes, the user clicks the save button B2 to save the annotation data #2 that has been manually corrected. Here, the data output control portion 104 may be configured to display the save button B2 in grayed-out form and not activate it until all the list columns 611 in the list image 61 become the confirmed list columns 611A.

Alternatively, in response to the save button B2 being clicked, the data output control portion 104 may output, as output data (that is, annotation data), only the information of association between the video data D and the task information that has accepted the instruction input indicating confirmation by the confirmation acceptance portion 1032.

Further, as described above, in the case of performing control to reduce the reproduction speed at the timing of switching the reproduction display of the video data D, the storage portion 14 may be separately provided with a reproduction speed table shown in FIG. 10.

The reproduction and display control portion 102 sets the reproduction speed during video reproduction based on the reproduction speed table. In the reproduction speed table of FIG. 10, for the predetermined period of switching the reproduction display, for example, 0.5 times is set to make the reproduction speed slower than the normal reproduction speed. Further, for the video data D whose display time t is longer than the predetermined value T, for example, 2 times is set to make the reproduction speed faster than the normal reproduction speed. For video data D whose display time t is shorter than the predetermined value T, for example, 0.5 times is set to make the reproduction speed slower than the normal reproduction speed. For video data D whose display time t is between T1 and T2 in length, 1 time is set as the normal reproduction speed.

It is noted that in the above, the case where the user uses the data generation device 1 to manually correct the annotation data #2 for 19 cycles generated by the video analysis AI of the cloud server 21 has been described. However, the annotation data to be manually corrected is not limited to that generated by the video analysis AI, and may be annotation data with low-accuracy annotation performed, etc.

Further, although the data collection system 50 includes the cloud platform 2, the data collection system may be configured without including the cloud platform 2. That is, instead of the cloud server 21, a video analysis AI possessed by a local cloud server (not shown) may be used.

### (Effect)

According to the above configuration, the association between the video data D and the task information is displayed, and the user input for the task information is enabled. Thus, the user may reproduce and display the video data to confirm the content and perform input for the task information. Further, since the video data D is displayed in a reproduction and display format according to the type of the associated task information, the user may recognize the type of the associated task information by visually confirming only the video data D. That is, the user may confirm the appropriateness of the task information while concentrating on visually confirming the reproduction display of the video data D. Thus, it becomes possible to efficiently and accurately create the training data necessary for creating a video analysis model.

Further, the data acquisition portion 105 may acquire the annotation data #2 (first output data) output by the AI model #1, and the information display control portion 101 may perform display control based on the annotation data #2.

According to the above configuration, the user may create training data by confirming the appropriateness of the associated data between the video data D and the task information output by the AI model #1, and correcting the association as necessary. Thus, the generation of training data may be implemented more efficiently.

Further, the reproduction and display control portion 102 may display an identification image 65 indicating the type of the associated task information in at least one of at least a part of the domain 123 for reproducing and displaying the video data D, and at least a part of the domain around the reproduction domain.

According to the above configuration, the user may visually confirm the identification image 65 without shifting their gaze from the video 62 in which the video data D is reproduced, and grasp the task information associated with the video data D. Thus, the user may efficiently confirm the appropriateness of the associated data between the video data D and the task information.

Further, the reproduction and display control portion 102 may display a frame image 66 that surrounds the video 62 as the identification image 65, in a color corresponding to the type of the task information.

According to the above configuration, the user may more easily confirm the appropriateness of the associated data between the video data D and the task information by confirming the color of the frame image 66 displayed around the video 62.

Further, the reproduction and display control portion 102 may change the reproduction speed of the video data D according to the type of the associated task information.

According to the above configuration, for example, in the case of a type of the task information that requires attention or ends in a short time, control such as slowing down the reproduction speed becomes possible. Thus, the user may more accurately confirm the appropriateness of the associated data between the video data D and the task information.

The reproduction and display control portion 102 may also reduce the reproduction speed during at least a part of a period from a predetermined time before to a predetermined time after the timing of switching the reproduction display of the video data D.

The timing of switching the reproduction display of the video data D is when the work content changes, making it highly likely to obtain particularly important information. According to the above configuration, since the reproduction speed is reduced in the vicinity of the timing of switching the reproduction display of the video data D, the change state of the work content may be confirmed in more detail. Thus, the user may more accurately confirm the appropriateness of the associated data between the video data D and the task information.

### [Implementation example by software]

The functions of the data generation device 1 (hereinafter referred to as "device") may be implemented by a program for causing a computer to function as the device, specifically a program for causing a computer to function as each control block of the device (particularly each portion included in the control portion 10).

In this case, the device includes a computer having at least one control device (for example, a processor) and at least one storage device (for example, a memory) as hardware for executing the program. By executing the program with the control device and the storage device, each function described in each of the above embodiments is implemented.

The program may be recorded on one or a plurality of computer-readable recording media that are not temporary. The recording medium may or may not be provided in the device. In the latter case, the program may be supplied to the device via any wired or wireless transmission medium.

Further, part or all of the functions of each of the above control blocks may be implemented by logic circuits. For example, an integrated circuit in which logic circuits functioning as each of the above control blocks are formed is also included in the scope of the present invention. In addition to this, it is also possible to implement the functions of each of the above control blocks by, for example, a quantum computer.

### [Summary]

The data generation device according to aspect 1 of the present invention includes an information display control portion, performing control to associate and display work content information with each of a plurality of video data in which production work is captured; a reproduction and display control portion, performing reproduction and display of the video data; an input acceptance portion, accepting user input for the work content information associated with the video data; and a data output control portion, configured to output, as output data, information of association between the video data and the work content information, the information of association being accepted by the input acceptance portion. The reproduction and display control portion changes a reproduction and display format of the video data according to a type of the work content information associated with the video data being reproduced and displayed.

According to the above configuration, the association between the video data and the work content information is displayed, and the user input for the work content information is enabled. Thus, the user may reproduce and display the video data to confirm the content and perform input for the work content information. Further, since the video data is displayed in a reproduction and display format according to the type of the associated work content information, the user may recognize the type of the associated work content information by visually recognizing only the video data. That is, the user may confirm the appropriateness of the work content information while concentratedly visually recognizing the reproduction and display of the video data. Thus, it becomes possible to efficiently and accurately create the training data necessary for creating a video analysis model.

The data generation device according to aspect 2 of the present invention is the data generation device of aspect 1, further including a data acquisition portion that acquires first output data output by a first video analysis model that associates the work content information with each of the plurality of video data. The information display control portion performs display control based on the first output data.

According to the above configuration, the user may create training data by confirming the appropriateness of the associated data between the video data and the work content information output by the first video analysis model and correcting the association as necessary. Thus, the generation of training data may be implemented more efficiently.

The data generation device according to aspect 3 of the present invention is the data generation device of aspect 1 or 2, in which the reproduction and display control portion displays an identification image indicating a type of the work content information associated in at least one of at least a part of a reproduction domain that reproduces and displays the video data and at least a part of a domain around the reproduction domain.

According to the above configuration, the user may visually recognize the identification image displayed on at least one of the reproduction domain of the video data and around the reproduction domain. Thus, the user may efficiently confirm the appropriateness of the association data between the video data and the work content information.

The data generation device according to aspect 4 of the present invention is the data generation device of aspect 3, in which the reproduction and display control portion displays a frame image that surrounds the reproduction domain as the identification image and sets a color of the frame image to a color corresponding to a type of the work content information associated.

According to the above configuration, the user may more easily confirm the appropriateness of the association data between the video data and the work content information by confirming the color of the frame domain displayed around the reproduction domain of the video data.

The data generation device according to aspect 5 of the present invention is the data generation device of any one of aspects 1 to 4, in which the reproduction and display control portion changes a reproduction speed of the video data according to a type of the work content information associated.

According to the above configuration, since the reproduction speed is changed according to the type of work content information, control such as slowing down the reproduction speed becomes possible in the case of types of work content information that require attention or are completed in a short time. Thus, the user may more accurately confirm the appropriateness of the association data between the video data and the work content information.

The data generation device according to aspect 6 of the present invention is the data generation device of any one of aspects 1 to 5, in which the reproduction and display control portion reduces a reproduction speed during at least a part of a period from a predetermined time before to a predetermined time after a timing of switching of reproduction and display of the video data.

The timing of switching the reproduction display of the video data is when the work content changes, making it highly likely to obtain particularly important information. According to the above configuration, since the reproduction speed is reduced in the vicinity of the timing of switching the reproduction display of the video data, the change state of the work content may be confirmed in more detail. Thus, the user may more accurately confirm the appropriateness of the association data between the video data and the work content information.

The data generation method according to aspect 7 of the present invention includes an information display control step of performing control to associate and display work content information with each of a plurality of video data in which production work is captured; a reproduction and display control step of performing reproduction and display of the video data; an input acceptance step of accepting user input for the work content information associated with the video data; and a data output control step of outputting, as output data, information of association between the video data and the work content information, the information of association being accepted in the input acceptance step. The reproduction and display control step changes a reproduction and display format of the video data according to a type of the work content information associated with the video data being reproduced and displayed.

### <Additional notes>

The present invention is not limited to each embodiment described above, and various modifications are possible within the scope indicated in the claims. An embodiment obtained by appropriately combining technical means disclosed in different embodiments is also included in the technical scope of the present invention.

### Reference Signs List

1 Data generation device
2 Cloud platform
10 Control portion
11 Input portion
12 display portion
14 Storage portion
62 Video
65, 65A, 65B, 65C Identification image
66 Frame image
101 Information display control portion
102 Reproduction and display control portion
103 Input acceptance portion
104 Data output control portion
105 Data acquisition portion
123 Domain (reproduction domain)
124 Domain (domain around reproduction domain)

## Claims

1. A data generation device, comprising:
an information display control portion, performing control to associate and display work content information with each of a plurality of video data in which production work is captured;
a reproduction and display control portion, performing reproduction and display of the video data;
an input acceptance portion, accepting user input for the work content information associated with the video data; and
a data output control portion, configured to output, as output data, information of association between the video data and the work content information, the information of association being accepted by the input acceptance portion,
wherein the reproduction and display control portion changes a reproduction and display format of the video data according to a type of the work content information associated with the video data being reproduced and displayed.

2. The data generation device according to claim 1, further comprising a data acquisition portion that acquires first output data output by a first video analysis model that associates the work content information with each of the plurality of video data,
wherein the information display control portion performs display control based on the first output data.

3. The data generation device according to claim 1, wherein the reproduction and display control portion displays an identification image indicating a type of the work content information associated in at least one of at least a part of a reproduction domain that reproduces and displays the video data and at least a part of a domain around the reproduction domain.

4. The data generation device according to claim 3, wherein the reproduction and display control portion displays a frame image that surrounds the reproduction domain as the identification image and sets a color of the frame image to a color corresponding to a type of the work content information associated.

5. The data generation device according to claim 1, wherein the reproduction and display control portion changes a reproduction speed of the video data according to a type of the work content information associated.

6. The data generation device according to claim 1, wherein the reproduction and display control portion reduces a reproduction speed during at least a part of a period from a predetermined time before to a predetermined time after a timing of switching of reproduction and display of the video data.

7. A data generation method, comprising:
an information display control step of performing control to associate and display work content information with each of a plurality of video data in which production work is captured;
a reproduction and display control step of performing reproduction and display of the video data;
an input acceptance step of accepting user input for the work content information associated with the video data; and
a data output control step of outputting, as output data, information of association between the video data and the work content information, the information of association being accepted in the input acceptance step,
wherein the reproduction and display control step changes a reproduction and display format of the video data according to a type of the work content information associated with the video data being reproduced and displayed.
